# EUROPEAN PATENT APPLICATION

(11) **EP 4 579 150 A1**
(43) Date of publication of application: **02.07.2025**
(21) Application number: 23897411.7
(22) Date of filing: 08.11.2023
(51) Int. Cl.: F25B 43/00, F25B 1/00, B60H 1/32, F25B 41/40

(54) **MANIFOLD**

(30) Priority: 30.11.2022 JP 2022191920; 14.03.2023 JP 2023039903; 23.06.2023 JP 2023102931; 29.09.2023 JP 2023170022
(71) Applicant: AISIN CORPORATION, Kariya-shi, Aichi 448-8650 (JP)
(72) Inventor: TANIYAMA Yoshihiro, Kariya-shi, Aichi 448-8650 (JP); YOSHIDA Satoshi, Kariya-shi, Aichi 448-8650 (JP); HAYASHI Shodai, Kariya-shi, Aichi 448-8650 (JP)
(74) Representative: Kramer Barske Schmidtchen Patentanwälte PartG mbB
(86) International application number: PCT/JP2023/040212
(87) International publication number: WO 2024/116757

(57) **Abstract**

A manifold includes a channel housing having a refrigerant channel through which a refrigerant flows. The channel housing internally includes a gas-liquid separator configured to separate, from a gas refrigerant that is the refrigerant in gas form flowing through the refrigerant channel, a liquid refrigerant that is the refrigerant in liquid form contained in the gas refrigerant.

## Description

### TECHNICAL FIELD

The present disclosure relates to a manifold.

### BACKGROUND ART

In recent years, vehicles including a motor as a traveling drive source (hybrid electric vehicle (HEV), plug-in hybrid electric vehicle (PHEV), battery electric vehicle (BEV), fuel cell electric vehicle (FCEV), etc.) have been widespread. These vehicles include a battery to drive the motor. These vehicles include many devices that require cooling, such as a motor (including an internal combustion engine such as an engine), a battery, an air conditioner, and an ECU. Therefore, these are cooled by cooling circuits through which a coolant and a refrigerant circulate. However, appropriate operating temperatures of these devices may differ from each other. In such a case, in order to vary the temperature of the circulating coolant or refrigerant for the devices with different operating temperatures, heat is exchanged through a heat exchanger such as a chiller or a water-cooled condenser to control the temperature of the coolant or refrigerant.

A heat exchange system disclosed in Patent Document 1 includes a heat pump cycle. The heat pump cycle includes auxiliary devices such as a compressor (compression machine in Patent Document 1), an indoor radiator, an electric expansion valve, a first heat exchanger, a solenoid valve, an evaporator (evaporation machine in Patent Document 1), and an accumulator. The heat pump cycle is a thermal cycle for heating or cooling the vehicle cabin.

### Related Art Documents

### Patent Documents

Patent Document 1: Japanese Unexamined Patent Application Publication No. 2013-139251 (JP 2013-139251 A)

### SUMMARY OF THE INVENTION

### Problem to be Solved by the Invention

In the heat exchange system disclosed in Patent Document 1, the auxiliary devices such as the compressor, the indoor radiator, the electric expansion valve, the first heat exchanger, the solenoid valve, the evaporator, and the accumulator are disposed as independent devices. Since the heat exchange system occupies a limited space in the engine compartment of the vehicle, there is room for improvement.

The present disclosure has been made in view of the above problem, and has an object to provide a small-size and low-cost manifold that incorporates auxiliary devices.

### Means for Solving the Problem

In one embodiment of the manifold according to the present disclosure, the manifold includes a channel housing having a refrigerant channel through which a refrigerant flows. The channel housing internally includes a gas-liquid separator configured to separate, from a gas refrigerant that is the refrigerant in gas form flowing through the refrigerant channel, a liquid refrigerant that is the refrigerant in liquid form contained in the gas refrigerant.

In the present embodiment, the channel housing internally includes the gas-liquid separator that is one of the auxiliary devices. Thus, the size and cost of the manifold can be reduced compared with the case where the gas-liquid separator is provided externally.

### BRIEF DESCRIPTION OF THE DRAWINGS

[FIG. 1] FIG. 1 is a circuit configuration diagram of a cooling system including a manifold according to a first embodiment.
[FIG. 2] FIG. 2 is a schematic configuration diagram of the manifold.
[FIG. 3] FIG. 3 is a sectional view taken along line III-III and seen in the direction of arrows in FIG. 2, showing an accumulator disposed in the manifold according to the first embodiment.
[FIG. 4] FIG. 4 is a sectional view of an accumulator disposed in a manifold according to a second embodiment.
[FIG. 5] FIG. 5 is a sectional view taken along line V-V and seen in the direction of arrows in FIG. 4.
[FIG. 6] FIG. 6 is a sectional view taken along line VI-VI and seen in the direction of arrows in FIG. 4.
[FIG. 7] FIG. 7 is a sectional view of an accumulator disposed in a manifold according to a third embodiment.
[FIG. 8] FIG. 8 is a sectional view taken along line VIII-VIII and seen in the direction of arrows in FIG. 7.
[FIG. 9] FIG. 9 is a sectional view taken along line IX-IX and seen in the direction of arrows in FIG. 7.
[FIG. 10] FIG. 10 is a sectional view of an accumulator disposed in a manifold according to a fourth embodiment.
[FIG. 11] FIG. 11 is a sectional view taken along line XI-XI and seen in the direction of arrows in FIG. 10.
[FIG. 12] FIG. 12 is a sectional view taken along line XII-XII and seen in the direction of arrows in FIG. 10.
[FIG. 13] FIG. 13 is a sectional view taken along line XIII-XIII and seen in the direction of arrows in FIG. 12.
[FIG. 14] FIG. 14 is a sectional view of an accumulator disposed in a manifold according to a fifth embodiment.
[FIG. 15] FIG. 15 is a sectional perspective view of the accumulator disposed in the manifold according to the fifth embodiment.
[FIG. 16] FIG. 16 is a sectional view taken along line XVI-XVI and seen in the direction of arrows in FIG. 14.
[FIG. 17] FIG. 17 is a sectional view taken along line XVII-XVII and seen in the direction of arrows in FIG. 14.

### MODES FOR CARRYING OUT THE INVENTION

Hereinafter, embodiments of a manifold according to the present disclosure will be described in detail with reference to the drawings. The embodiments described below are merely examples illustrating the present disclosure, and the present disclosure is not limited to only these embodiments. Therefore, the present disclosure can be carried out in various forms without departing from the spirit and scope of the present disclosure.

### [Configuration of Cooling System]

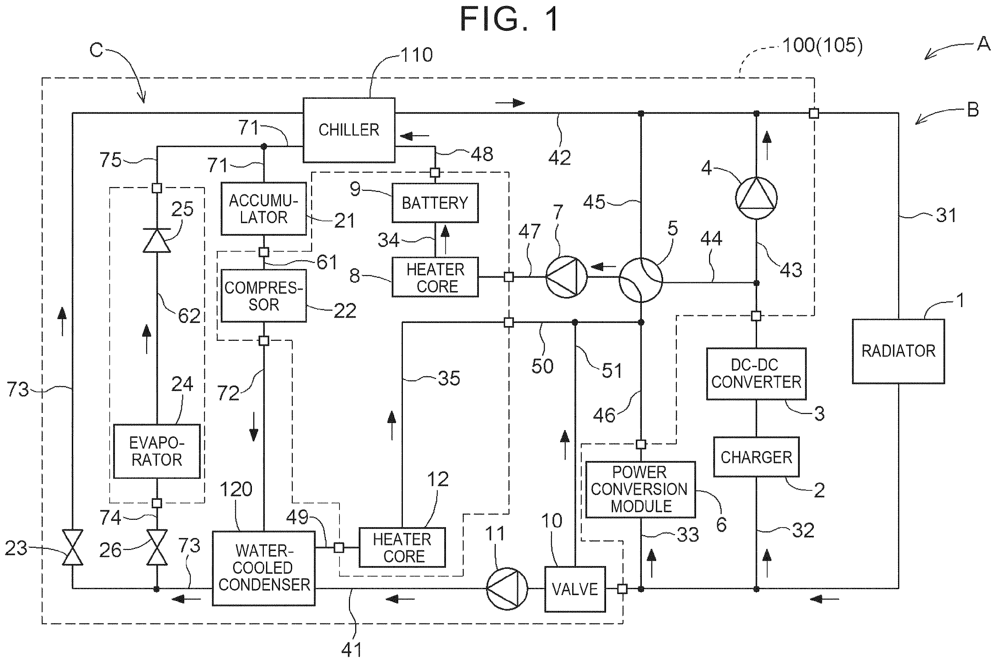

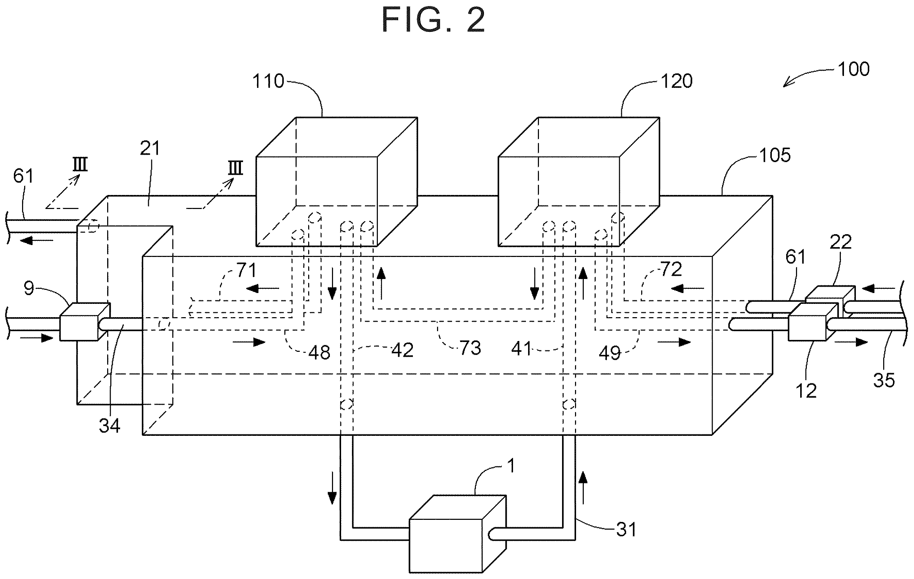

As shown in FIG. 1, a cooling system A including a manifold 100 according to the embodiments is roughly composed of a coolant circuit B and a refrigerant circuit C. A coolant with high electrical insulation properties, such as an antifreeze liquid mainly containing ethylene glycol etc., a long-life coolant (LLC), or a fluorine-based inert liquid, circulates through the coolant circuit B. A refrigerant such as hydrofluorocarbon (HFC) or hydrofluoroolefin (HFO) circulates through the refrigerant circuit C. In FIG. 1, a portion enclosed by dashed lines is the manifold 100 according to the embodiments. The manifold 100 includes auxiliary devices including a channel housing 105, an accumulator 21 (an example of a gas-liquid separator), a chiller 110, a water-cooled condenser 120, a first electric pump 4, a rotary valve 5 that is a four-way valve, a second electric pump 7, a switching valve 10 that is a three-way valve, a third electric pump 11, a first expansion valve 23, and a second expansion valve 26. In FIG. 1, the auxiliary devices are depicted as being inside the channel housing 105. As shown in FIG. 2, however, they are actually mounted on the outer surface of the channel housing 105 except for the accumulator 21. The accumulator 21 is included in the channel housing 105 and disposed inside the channel housing 105. The phrase "disposed inside the channel housing 105" about the accumulator 21 includes formation of at least part of the functions of the accumulator 21 simultaneously with the formation of the channel housing 105. The detailed configuration of the accumulator 21 will be described later.

FIG. 2 is a schematic configuration diagram of the manifold 100. In FIG. 2, illustration is omitted for the auxiliary devices (e.g., pumps and valves) other than the accumulator 21, the chiller 110, and the water-cooled condenser 120. In the embodiments, the channel housing 105 is formed by a die casting method using a metal material having high thermal conductivity, including aluminum. Although division planes are not shown in FIG. 2, the channel housing 105 is formed by joining a plurality of housing components. The channels constituting the coolant circuit B and the refrigerant circuit C and the accumulator 21 are formed simultaneously when the housing components are molded.

First, the coolant circuit B will be described. The coolant circuit B is a channel on the right side of the chiller 110 and the water-cooled condenser 120 in FIG. 1. The coolant circuit B includes a first external channel 31 outside the channel housing 105. The first external channel 31 is connected to a first internal channel 41 and a second internal channel 42 formed inside the channel housing 105. A radiator 1 is disposed midway along the first external channel 31. The coolant flows through the second internal channel 42, the first external channel 31, the radiator 1, the first external channel 31, and the first internal channel 41 in this order. Hereinafter, an upstream side and a downstream side in the coolant flow direction in the coolant circuit B will also be simply referred to as an upstream side and a downstream side.

A second external channel 32 and a third external channel 33 branch from the first external channel 31 on the downstream side of the radiator 1 in the first external channel 31 and the upstream side of the first internal channel 41. The second external channel 32 is connected on the downstream side to a third internal channel 43 formed inside the channel housing 105. The third internal channel 43 is connected to the second internal channel 42 on the downstream side. The coolant that branches from the first external channel 31 to the second external channel 32 flows through the second external channel 32, cools a charger 2 and a DC-DC converter 3, and flows into the third internal channel 43. The coolant is pressurized by the first electric pump 4 in the third internal channel 43 and then flows into the second internal channel 42.

A fourth internal channel 44 branches from the third internal channel 43 on the upstream side of the first electric pump 4 in the third internal channel 43. In the state of FIG. 1, the fourth internal channel 44 is connected to a fifth internal channel 45 via the rotary valve 5. The downstream side of the fifth internal channel 45 is connected to the second internal channel 42.

The third external channel 33 is connected on the downstream side to a sixth internal channel 46 formed inside the channel housing 105. The sixth internal channel 46 is connected to a seventh internal channel 47 via the rotary valve 5. The second electric pump 7 is disposed midway along the seventh internal channel 47. The coolant that branches from the first external channel 31 to the third external channel 33 flows through the third external channel 33, cools a power conversion module 6, and flows into the sixth internal channel 46. In the state of FIG. 1, the coolant is pressurized by the second electric pump 7 in the seventh internal channel 47 via the rotary valve 5 and then flows out of the channel housing 105. The power conversion module 6 is a module in which a rotary electric machine, a speed reducer, a differential gear mechanism, and a power converter (inverter) are integrally housed in a housing. By rotating the rotary valve 5, the fourth internal channel 44 and the sixth internal channel 46 can be connected together and the fifth internal channel 45 and the seventh internal channel 47 can be connected together.

The seventh internal channel 47 is connected to a fourth external channel 34 outside the channel housing 105. The fourth external channel 34 is connected on the downstream side to an eighth internal channel 48 formed inside the channel housing 105. The coolant flowing out of the seventh internal channel 47 flows through the fourth external channel 34 and is cooled by a first heater core 8. Then, the coolant is heated by cooling a battery 9 and flows into the eighth internal channel 48. The eighth internal channel 48 is connected to the chiller 110 on the downstream side. The downstream side of the chiller 110 is connected to the second internal channel 42. The coolant flowing through the eighth internal channel 48 flows into the chiller 110. In the chiller 110, the coolant is cooled as heat is removed by a misty refrigerant flowing in from a third internal refrigerant channel 73 described later. Then, the coolant flows through the second internal channel 42. The coolant flowing through the second internal channel 42 flows into the first external channel 31 connected to the outside of the channel housing 105.

The first internal channel 41 connected to the first external channel 31 is connected to the water-cooled condenser 120 on the downstream side. The switching valve 10 and the third electric pump 11 are disposed in this order midway along the first internal channel 41. The downstream side of the water-cooled condenser 120 is connected to a ninth internal channel 49. The coolant flowing into the first internal channel 41 is pressurized by the third electric pump 11 and flows into the water-cooled condenser 120. In the water-cooled condenser 120, the coolant is heated by removing heat from a high-temperature compressed gas refrigerant flowing in from a second internal refrigerant channel 72 described later. Then, the coolant flows through the ninth internal channel 49 and flows out of the channel housing 105.

The ninth internal channel 49 is connected to a fifth external channel 35 outside the channel housing 105. The fifth external channel 35 is connected on the downstream side to a tenth internal channel 50 formed inside the channel housing 105. The tenth internal channel 50 is connected to the sixth internal channel 46 on the downstream side. The coolant flowing out of the ninth internal channel 49 flows through the fifth external channel 35, is cooled by a second heater core 12, and flows into the tenth internal channel 50. The coolant flowing through the tenth internal channel 50 flows into the sixth internal channel 46.

The switching valve 10 disposed in the first internal channel 41 switches the coolant flow direction between the first internal channel 41 and an eleventh internal channel 51 formed inside the channel housing 105. The eleventh internal channel 51 is connected to the tenth internal channel 50 on the downstream side. When the switching valve 10 is switched so that the coolant flows through the eleventh internal channel 51, the coolant flows from the first internal channel 41 into the tenth internal channel 50 through the eleventh internal channel 51, and then flows into the sixth internal channel 46.

Next, the refrigerant circuit C will be described. The refrigerant circuit C is a channel on the left side of the chiller 110 and the water-cooled condenser 120 in FIG. 1. The refrigerant circuit C is formed inside the channel housing 105, and the refrigerant flows through it. A first internal refrigerant channel 71 (an example of a refrigerant channel) is provided on a downstream side in the refrigerant flow direction relative to the chiller 110 (hereinafter, an upstream side and a downstream side in the refrigerant flow direction in the refrigerant circuit C will also be simply referred to as an upstream side and a downstream side). The first internal refrigerant channel 71 is connected to the accumulator 21 formed inside the channel housing 105. The accumulator 21 is connected to a first external refrigerant channel 61 formed outside the channel housing 105 (see FIG. 2 as well). A compressor 22 is disposed midway along the first external refrigerant channel 61. The first external refrigerant channel 61 is connected on the downstream side to the second internal refrigerant channel 72 formed inside the channel housing 105. The second internal refrigerant channel 72 is connected to the water-cooled condenser 120 on the downstream side. The downstream side of the water-cooled condenser 120 is connected to the third internal refrigerant channel 73 formed inside the channel housing 105. The third internal refrigerant channel 73 is connected to the chiller 110 via the first expansion valve 23 disposed midway along the third internal refrigerant channel 73. That is, in the channel housing 105, the water-cooled condenser 120 is mounted at a position upstream in the refrigerant flow direction in the third internal refrigerant channel 73, and the chiller 110 is mounted at a position downstream in the refrigerant flow direction.

A fourth internal refrigerant channel 74 branches from the third internal refrigerant channel 73 on the upstream side of the first expansion valve 23 in the third internal refrigerant channel 73. The second expansion valve 26 is disposed midway along the fourth internal refrigerant channel 74. The fourth internal refrigerant channel 74 is connected to a second external refrigerant channel 62 formed outside the channel housing 105. An evaporator 24 and a check valve 25 are disposed in this order midway along the second external refrigerant channel 62. The second external refrigerant channel 62 is connected to a fifth internal refrigerant channel 75 formed inside the channel housing 105. The fifth internal refrigerant channel 75 is connected to the first internal refrigerant channel 71 on the downstream side.

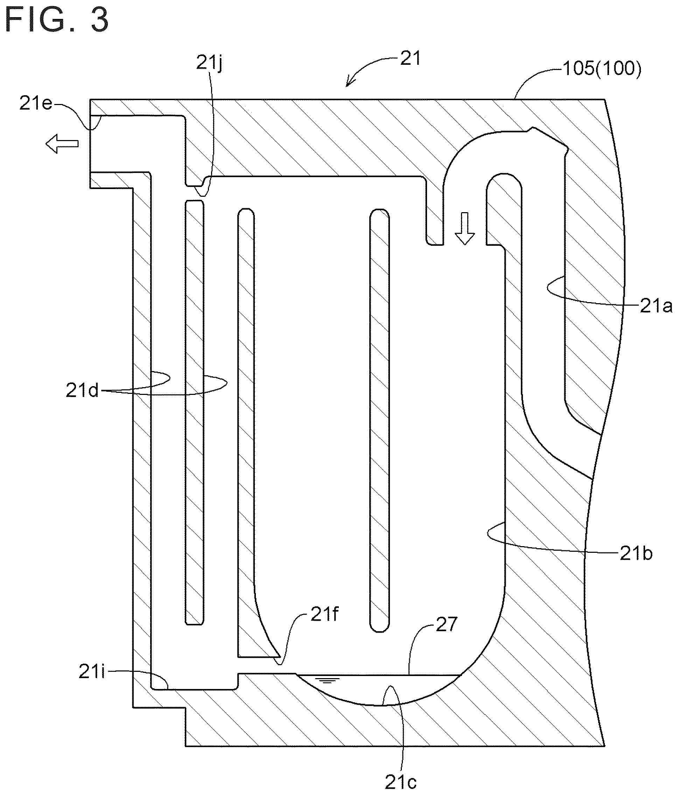

Next, the flow of the refrigerant in the refrigerant circuit C will be described. The refrigerant that circulates through the first external refrigerant channel 61 and turns into a high-temperature compressed gas in the compressor 22 circulates through the first external refrigerant channel 61 and flows into the water-cooled condenser 120 through the second internal refrigerant channel 72. The refrigerant is condensed and liquefied in the water-cooled condenser 120 as heat is removed by the coolant flowing in from the first internal channel 41. The liquefied refrigerant to be used for cooling the vehicle cabin exits the water-cooled condenser 120 and flows through the third internal refrigerant channel 73 and the fourth internal refrigerant channel 74. The refrigerant is expanded in the second expansion valve 26 into a low-temperature and low-pressure mist, and then flows out of the channel housing 105. The refrigerant flows through the second external refrigerant channel 62 and is sent to the evaporator 24. The misty refrigerant is evaporated in the evaporator 24 by removing heat from air introduced from the outside. Conversely, the air is cooled as heat is removed by the refrigerant, and the air is sent to the vehicle cabin as cool air. The evaporated and gasified refrigerant flows into the fifth internal refrigerant channel 75 through the check valve 25 disposed in the second external refrigerant channel 62, and is sent to the accumulator 21 through the first internal refrigerant channel 71. When the gasified refrigerant (an example of a gas refrigerant; hereinafter also referred to simply as the gas refrigerant) contains a liquid (an example of a liquid refrigerant; hereinafter also referred to as a liquid refrigerant 27 (see FIG. 3)), the accumulator 21 separates the liquid refrigerant 27 from the gas refrigerant. Then, the gas refrigerant flows out of the accumulator 21, flows through the first external refrigerant channel 61, and returns to the compressor 22. In the compressor 22, the refrigerant is compressed again into a high-temperature compressed gas.

The liquid refrigerant 27 that is liquefied in the water-cooled condenser 120 and is not used for cooling the vehicle cabin exits the water-cooled condenser 120 and flows through the third internal refrigerant channel 73. The refrigerant is expanded in the first expansion valve 23 into a low-temperature and low-pressure mist, and is then sent to the chiller 110. The misty refrigerant is evaporated in the chiller 110 by removing heat from the coolant flowing in from the eighth internal channel 48. The evaporated and gasified gas refrigerant is sent to the accumulator 21 through the first internal refrigerant channel 71. Since the second external refrigerant channel 62 has the check valve 25, the gas refrigerant flowing out of the chiller 110 does not flow into the evaporator 24. When the gas refrigerant contains a liquid, the accumulator 21 separates the liquid refrigerant. Then, the gasified refrigerant flows out of the accumulator 21, flows through the first external refrigerant channel 61, and returns to the compressor 22. In the compressor 22, the refrigerant is compressed again into a high-temperature compressed gas.

### [Configuration of Channel Housing]

In general, heat exchange between the coolant and the refrigerant is performed only in the heat exchangers that are the chiller 110 and the water-cooled condenser 120. In the embodiments, the channels of the coolant circuit B and the channels of the refrigerant circuit C are brought close to each other inside the channel housing 105 to perform heat exchange between the channels as well as in the chiller 110 and the water-cooled condenser 120.

Specifically, as shown in FIG. 2, the disposition of the channels connected to the chiller 110 is such that, in the channel housing 105, the eighth internal channel 48 of the coolant circuit B through which the coolant flows into the chiller 110 and the first internal refrigerant channel 71 of the refrigerant circuit C through which the refrigerant flows out of the chiller 110 are disposed parallel to and close to each other and the second internal channel 42 of the coolant circuit B through which the coolant flows out of the chiller 110 and the third internal refrigerant channel 73 of the refrigerant circuit C through which the refrigerant flows into the chiller 110 are disposed parallel to and close to each other. At this time, the flow direction of the coolant flowing through the eighth internal channel 48 is opposite to the flow direction of the refrigerant flowing through the first internal refrigerant channel 71, and the flow direction of the coolant flowing through the second internal channel 42 is opposite to the flow direction of the refrigerant flowing through the third internal refrigerant channel 73. In the channel housing 105, the eighth internal channel 48 and the first internal refrigerant channel 71 exchange heat at L-shaped portions, and the second internal channel 42 and the third internal refrigerant channel 73 exchange heat at straight portions. By structuring the internal channels in this way in the channel housing 105, heat exchange is performed not only in the chiller 110 but also between the coolant flowing through the eighth internal channel 48 and the refrigerant flowing through the first internal refrigerant channel 71, and between the coolant flowing through the second internal channel 42 and the refrigerant flowing through the third internal refrigerant channel 73. Since heat exchange is performed also between the internal channel and the internal refrigerant channel outside the chiller 110 in this way, sufficient cooling performance can be obtained even if a small-size chiller 110 is used.

Specifically, as shown in FIG. 2, the disposition of the channels connected to the water-cooled condenser 120 is such that, in the channel housing 105, the first internal channel 41 of the coolant circuit B through which the coolant flows into the water-cooled condenser 120 and the third internal refrigerant channel 73 of the refrigerant circuit C through which the refrigerant flows out of the water-cooled condenser 120 are disposed parallel to and close to each other and the ninth internal channel 49 of the coolant circuit B through which the coolant flows out of the water-cooled condenser 120 and the second internal refrigerant channel 72 of the refrigerant circuit C through which the refrigerant flows into the water-cooled condenser 120 are disposed parallel to and close to each other. At this time, the flow direction of the coolant flowing through the first internal channel 41 is opposite to the flow direction of the refrigerant flowing through the third internal refrigerant channel 73, and the flow direction of the coolant flowing through the ninth internal channel 49 is opposite to the flow direction of the refrigerant flowing through the second internal refrigerant channel 72. In the channel housing 105, the first internal channel 41 and the third internal refrigerant channel 73 exchange heat at straight portions, and the ninth internal channel 49 and the second internal refrigerant channel 72 exchange heat at L-shaped portions. By structuring the internal channels in this way in the channel housing 105, heat exchange is performed not only in the water-cooled condenser 120 but also between the coolant flowing through the first internal channel 41 and the refrigerant flowing through the third internal refrigerant channel 73, and between the coolant flowing through the ninth internal channel 49 and the refrigerant flowing through the second internal refrigerant channel 72. Since heat exchange is performed also between the internal channel and the internal refrigerant channel outside the water-cooled condenser 120 in this way, sufficient cooling performance can be obtained even if a small-size water-cooled condenser 120 is used.

### [Configuration of Accumulator]

As shown in FIG. 2, the accumulator 21 is disposed inside the channel housing 105 of the manifold 100 according to the embodiments. Specifically, as shown in FIG. 3, a channel having a gas-liquid separation function is formed in the channel housing 105. In the accumulator 21 shown in FIGS. 2 and 3, an upward direction along the drawing sheet will be hereinafter referred to as an upward direction of the accumulator 21, and a downward direction along the drawing sheet will be hereinafter referred to as a downward direction of the accumulator 21. A direction from the top to the bottom of the accumulator 21 will be referred to as a vertical direction.

### [First Embodiment]

As described above, the gas refrigerant flows through the first internal refrigerant channel 71 formed inside the channel housing 105. The gas refrigerant flows from the first internal refrigerant channel 71 into an inlet portion 21a of the accumulator 21. The downstream end of the first internal refrigerant channel 71 (the upstream end of the inlet portion 21a) is disposed near the center of the channel housing 105 in the up-down direction. The inlet portion 21a is a channel through which the gas refrigerant flows and that is disposed between the first internal refrigerant channel 71 and a gas-liquid separation portion 21b of the accumulator 21 described later.

The inlet portion 21a of the accumulator 21 curves upward from the portion connected to the first internal refrigerant channel 71, and is folded downward by 180° near the upper end of the channel housing 105. The inlet portion 21a folded to extend downward is connected to the gas-liquid separation portion 21b at the downstream end. The gas-liquid separation portion 21b is a gas refrigerant channel having a function of separating, from the gas refrigerant, the liquid refrigerant 27 contained in the gas refrigerant. The gas-liquid separation portion 21b has a U-shape extending downward from the top of the channel housing 105 and folded by 180° at the lower end to extend upward. The channel sectional area of the gas-liquid separation portion 21b is larger than the channel sectional area of the inlet portion 21a.

The gas refrigerant flowing into the accumulator 21 contains misty refrigerating machine oil in addition to the liquid refrigerant 27. The refrigerating machine oil is lubricating oil that lubricates the compressor 22. The refrigerating machine oil flows out of the compressor 22 in the form of mist contained in the gas refrigerant, and returns to the compressor 22 together with the gas refrigerant. The misty refrigerating machine oil is separated from the gas refrigerant together with the liquid refrigerant 27 in the gas-liquid separation portion 21b. Hereinafter, the liquid refrigerant 27 and the refrigerating machine oil may be collectively referred to as the liquid refrigerant 27 etc.

The downstream end of the gas-liquid separation portion 21b is located at the upper end of the channel housing 105. The downstream end of the gas-liquid separation portion 21b is connected to an extension portion 21d disposed opposite to the inlet portion 21a across the gas-liquid separation portion 21b. The extension portion 21d is a channel through which the gas refrigerant flows after the liquid refrigerant 27 etc. have been separated. The extension portion 21d extends downward from the top of the channel housing 105, and is folded by 180° at the lower end to extend upward. That is, the channel is folded by 180° from the downstream end of the gas-liquid separation portion 21b to the upstream end of the extension portion 21d, and the extension portion 21d has a U-shape. The upstream end and the downstream end of the extension portion 21d communicate with each other by a through passage 21j that is a through hole. The channel sectional area of the extension portion 21d is smaller than the channel sectional area of the gas-liquid separation portion 21b.

An outlet portion 21e is disposed laterally from the downstream end of the extension portion 21d. The outlet portion 21e is connected to the extension portion 21d, and the gas refrigerant flowing through the extension portion 21d flows through the outlet portion 21e. That is, the extension portion 21d establishes communication between the gas-liquid separation portion 21b and the outlet portion 21e. The outlet portion 21e is located at the upper end of the channel housing 105 and is connected to the first external refrigerant channel 61 (see FIG. 2). The gas refrigerant flowing through the outlet portion 21e flows into the first external refrigerant channel 61. That is, the outlet portion 21e is a channel through which the gas refrigerant from which the liquid refrigerant 27 etc. have been separated flows out of the accumulator 21. The channel sectional area of the outlet portion 21e is smaller than the channel sectional area of the gas-liquid separation portion 21b.

The liquid refrigerant 27 etc. separated from the gas refrigerant in the gas-liquid separation portion 21b are accumulated in a first accumulation portion 21c (an example of an accumulation portion) that is a bottom part of the U-shape of the gas-liquid separation portion 21b. The first accumulation portion 21c and the vicinity of the lower end of the extension portion 21d are connected by a communication portion 21f extending laterally from the first accumulation portion 21c.

Next, the operation of the accumulator 21 of the present embodiment will be described. The gas refrigerant flowing from the first internal refrigerant channel 71 into the inlet portion 21a flows into the gas-liquid separation portion 21b through the inlet portion 21a, and then flows downward through the U-shaped gas-liquid separation portion 21b. As described above, the flow direction of the gas refrigerant in the gas-liquid separation portion 21b is changed by 180° from the downward direction to the upward direction at the lower end (bottom) of the U-shape. When the flow direction of the gas refrigerant is changed in this way, the liquid refrigerant 27 etc. are separated from the gas refrigerant. The separated liquid refrigerant 27 etc. are accumulated in the first accumulation portion 21c. The gas refrigerant from which the liquid refrigerant 27 etc. have been separated flows upward through the gas-liquid separation portion 21b, turns by 180°, and flows into the extension portion 21d. As described above, the upstream end and the downstream end of the extension portion 21d communicate with each other by the through passage 21j. Therefore, the gas refrigerant flowing into the extension portion 21d flows separately through the extension portion 21d and the through passage 21j, and the streams merge at the downstream end of the extension portion 21d. The merged streams of the gas refrigerant flow into the outlet portion 21e and flow out of the outlet portion 21e to the first external refrigerant channel 61 connected to the outside of the accumulator 21.

Since the first accumulation portion 21c communicates with the extension portion 21d via the communication portion 21f, a negative pressure is generated between the first accumulation portion 21c and the communication portion 21f by the gas refrigerant flowing through the extension portion 21d. Therefore, when the gas refrigerant passes through the lower end of the extension portion 21d, part of the liquid refrigerant 27 etc. accumulated in the first accumulation portion 21c flow through the communication portion 21f by being sucked by the gas refrigerant due to the negative pressure, and are contained again in the gas refrigerant flowing through the extension portion 21d. The gas refrigerant containing the liquid refrigerant 27 etc. flows upward through the extension portion 21d. At the downstream end of the extension portion 21d, the gas refrigerant merges with the gas refrigerant flowing through the through passage 21j. The gas refrigerant flowing through the through passage 21j does not contain the liquid refrigerant 27 etc. Therefore, the gas refrigerant that has merged at the downstream end of the extension portion 21d contains only a small amount of the liquid refrigerant 27 etc. The gas refrigerant that has merged at the downstream end of the extension portion 21d then flows through the outlet portion 21e and flows out of the accumulator 21. Comparing the amount of the liquid refrigerant 27 etc. contained in the gas refrigerant before it flows into the accumulator 21 with the amount of the liquid refrigerant 27 etc. contained in the gas refrigerant after it flows out of the accumulator 21, the latter amount of the liquid refrigerant 27 etc. is smaller significantly. If a gas refrigerant containing a large amount of liquid refrigerant 27 flows into the compressor 22, liquid compression may occur inside the compressor 22 to damage the compressor 22. Since the amount of the liquid refrigerant 27 contained in the gas refrigerant in the accumulator 21 is small, the liquid compression does not occur in the compressor 22 even if the gas refrigerant containing the small amount of the liquid refrigerant 27 flows out of the accumulator 21 and flows into the compressor 22. Thus, there is no possibility of damage to the compressor 22. The compressor 22 also compresses the liquid refrigerant 27 contained in the gas refrigerant to produce a high-temperature compressed gas refrigerant. Therefore, there is no possibility of shortage of gas refrigerant that may cause a decrease in the cooling performance for the vehicle cabin. When the refrigerating machine oil returns to the compressor 22, it is reused as the lubricating oil.

When the compressor 22 is not operating, the liquid refrigerant 27 etc. accumulated in the first accumulation portion 21c may exceed a predetermined accumulation amount (the liquid surface may reach the communication portion 21f). In such a case, in the present embodiment, the excess liquid refrigerant 27 etc. flow through the communication portion 21f and are accumulated in a second accumulation portion 21i located at the lower end of the extension portion 21d. The second accumulation portion 21i is a bottom portion of the U-shape of the extension portion 21d. When the compressor 22 is operated and the gas refrigerant starts to flow through the accumulator 21, the liquid refrigerant 27 etc. accumulated in the second accumulation portion 21i flow out of the accumulator 21 by being contained in the gas refrigerant flowing through the extension portion 21d.

In the present embodiment, the channel housing 105 includes the gas-liquid separator that is one of the auxiliary devices. Thus, the size and cost of the manifold 100 can be reduced compared with the case where the accumulator 21 is provided externally.

### [Second Embodiment]

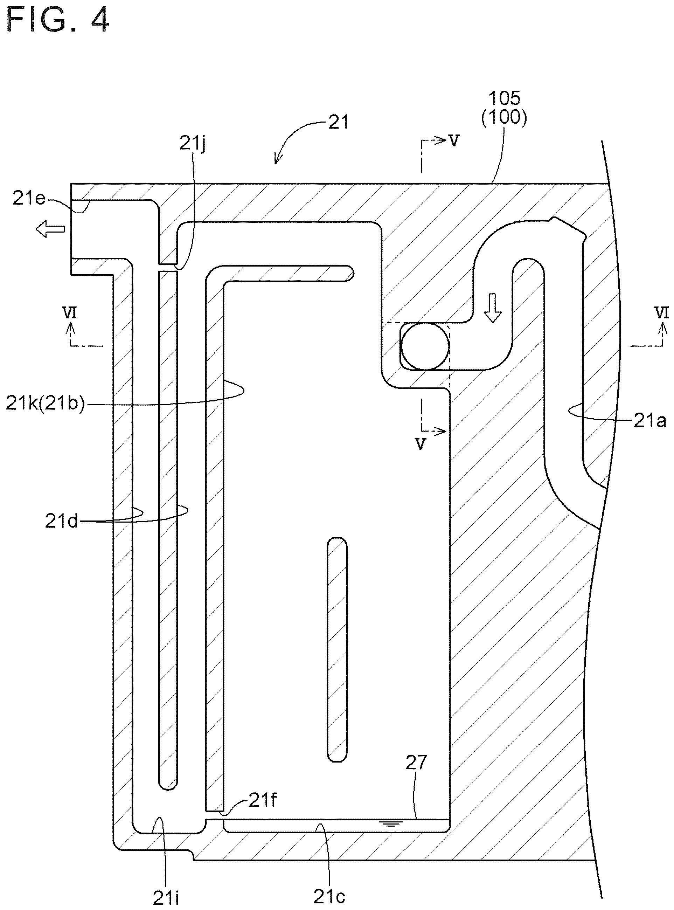

Next, an accumulator 21 disposed inside a manifold 100 according to a second embodiment will be described with reference to FIGS. 4 to 6. In the present embodiment, the shape of the downstream end of the inlet portion 21a and the configuration of the gas-liquid separation portion 21b in the accumulator 21 are different from those in the accumulator 21 of the first embodiment. The configuration of the present embodiment is otherwise the same as that of the first embodiment. Therefore, in the description of the present embodiment, the portions with the same configurations as those of the first embodiment are denoted with the same signs, and detailed description of the same configurations will be omitted.

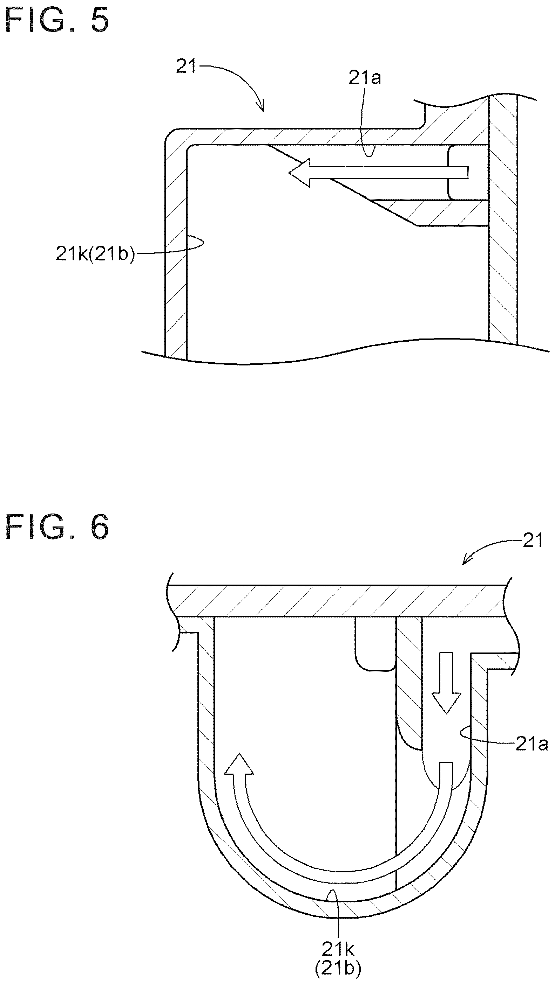

In the first embodiment, the downstream end of the inlet portion 21a of the accumulator 21 extends downward and is connected to the gas-liquid separation portion 21b. In the present embodiment, the downstream end of the inlet portion 21a extends in a horizontal direction (perpendicular to the vertical direction) and is connected to the gas-liquid separation portion 21b as shown in FIGS. 4 and 5. As shown in FIG. 6, the gas-liquid separation portion 21b has an inner circumferential surface 21k having an arc shape when viewed in the vertical direction. The downstream end of the inlet portion 21a is disposed on the side of the upstream end of the gas-liquid separation portion 21b and communicates with the gas-liquid separation portion 21b. Specifically, the downstream end of the inlet portion 21a is connected to the gas-liquid separation portion 21b along the tangential direction of the inner circumferential surface 21k of the gas-liquid separation portion 21b.

Therefore, the gas refrigerant flowing into the gas-liquid separation portion 21b through the inlet portion 21a flows along the arc-shaped inner circumferential surface 21k and turns into a horizontal swirling flow inside the gas-liquid separation portion 21b. The liquid refrigerant 27 etc. contained in the gas refrigerant are separated from the gas refrigerant by a centrifugal force generated by the swirling flow and adhere to the inner circumferential surface 21k. The liquid refrigerant 27 etc. adhering to the inner circumferential surface 21k fall downward along the inner circumferential surface 21k due to gravity, and are accumulated in the first accumulation portion 21c. The gas refrigerant from which the liquid refrigerant 27 etc. have been separated flows upward through the gas-liquid separation portion 21b, turns by 180°, and flows into the extension portion 21d.

### [Third Embodiment]

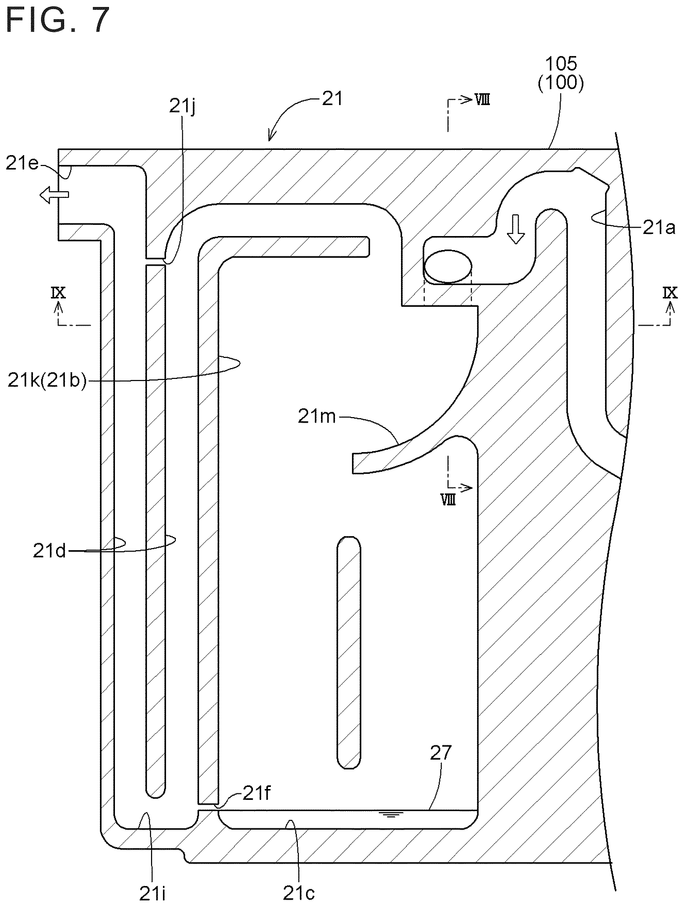

Next, an accumulator 21 disposed inside a manifold 100 according to a third embodiment will be described with reference to FIGS. 7 to 9. In the present embodiment, the shape of the downstream end of the inlet portion 21a and the configuration of the gas-liquid separation portion 21b in the accumulator 21 are different from those in the accumulators 21 of the first and second embodiments. The configuration of the present embodiment is otherwise the same as those of the first and second embodiments. Therefore, in the description of the present embodiment, the portions with the same configurations as those of the first and second embodiments are denoted with the same signs, and detailed description of the same configurations will be omitted.

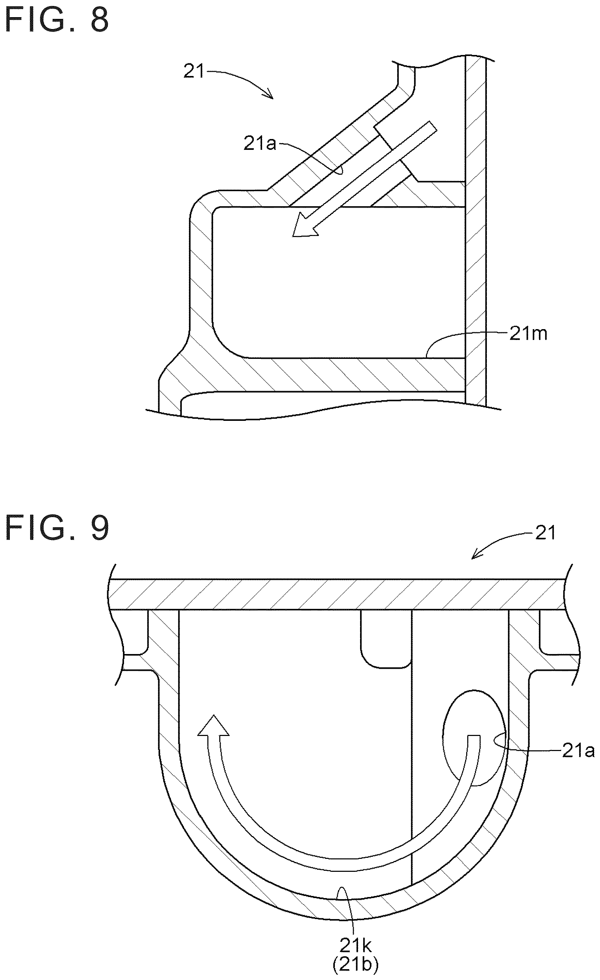

In the present embodiment, the downstream end of the inlet portion 21a extends in an obliquely downward direction (an obliquely downward direction inclined with respect to the vertical direction) and is connected to the gas-liquid separation portion 21b as shown in FIGS. 7 and 8. As shown in FIG. 6, the gas-liquid separation portion 21b has an inner circumferential surface 21k having an arc shape when viewed in the vertical direction. The downstream end of the inlet portion 21a is disposed on the side of the upstream end of the gas-liquid separation portion 21b and communicates with the gas-liquid separation portion 21b. Specifically, the downstream end of the inlet portion 21a is connected to the gas-liquid separation portion 21b along the tangential direction of the inner circumferential surface 21k of the gas-liquid separation portion 21b.

The gas-liquid separation portion 21b includes a guide 21m having a curved surface below the downstream end of the inlet portion 21a and below the inner circumferential surface 21k. As shown in FIG. 7, the curved surface of the guide 21m curves so that the base end side is vertical and the tip end side is horizontal. Therefore, the gas refrigerant flowing through the inlet portion 21a in the obliquely downward direction and flowing obliquely into the gas-liquid separation portion 21b has its flow direction changed to the horizontal direction by the guide 21m, and turns into a horizontal swirling flow inside the gas-liquid separation portion 21b by the arc-shaped inner circumferential surface 21k. The liquid refrigerant 27 etc. contained in the gas refrigerant are separated from the gas refrigerant by a centrifugal force generated by the swirling flow and adhere to the inner circumferential surface 21k and the guide 21m. The liquid refrigerant 27 etc. adhering to the inner circumferential surface 21k and the guide 21m fall downward along the inner circumferential surface 21k due to gravity, also fall downward from the tip of the guide 21m, and are accumulated in the first accumulation portion 21c. The gas refrigerant from which the liquid refrigerant 27 etc. have been separated flows upward through the gas-liquid separation portion 21b, turns by 180°, and flows into the extension portion 21d.

### [Fourth Embodiment]

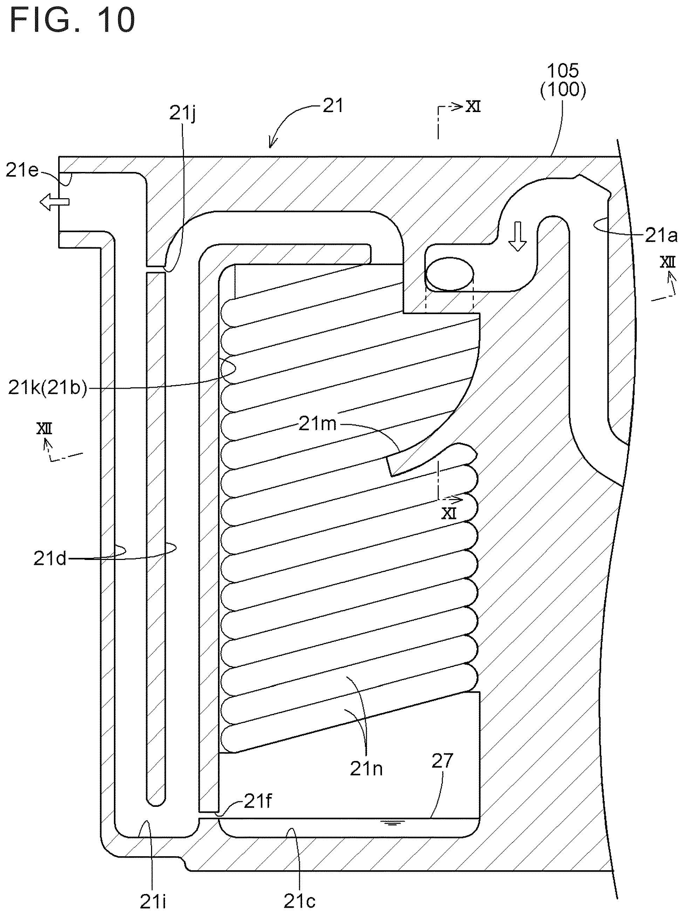

Next, an accumulator 21 disposed inside a manifold 100 according to a fourth embodiment will be described with reference to FIGS. 10 to 13. The present embodiment differs from the third embodiment in that a plurality of grooves 21n is formed to extend along the arc-shaped inner circumferential surface 21k of the accumulator 21 and the length of the guide 21m is reduced. The configuration of the present embodiment is otherwise the same as that of the third embodiment. Therefore, in the description of the present embodiment, the portions with the same configurations as those of the third embodiment are denoted with the same signs, and detailed description of the same configurations will be omitted.

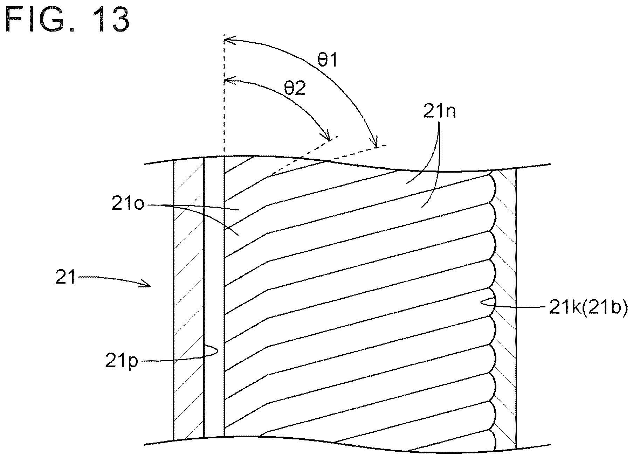

In the present embodiment, the plurality of grooves 21n is provided to efficiently guide, to the first accumulation portion 21c, the liquid refrigerant 27 etc. that are separated by the centrifugal force of the swirling flow from the gas refrigerant flowing into the gas-liquid separation portion 21b along the guide 21m and that adhere to the inner circumferential surface 21k. Specifically, the plurality of grooves 21n is inclined at a first angle θ1 with respect to the vertical direction and all of them are formed parallel to each other (see FIG. 13). The first angle θ1 of the groove 21n is an angle at which the groove 21n is parallel to the tangential direction of the tip of the guide 21m whose length is reduced so that the tip is inclined with respect to the vertical direction. Therefore, the liquid refrigerant 27 etc. separated and adhering to the inner circumferential surface 21k flow obliquely downward along the grooves 21n.

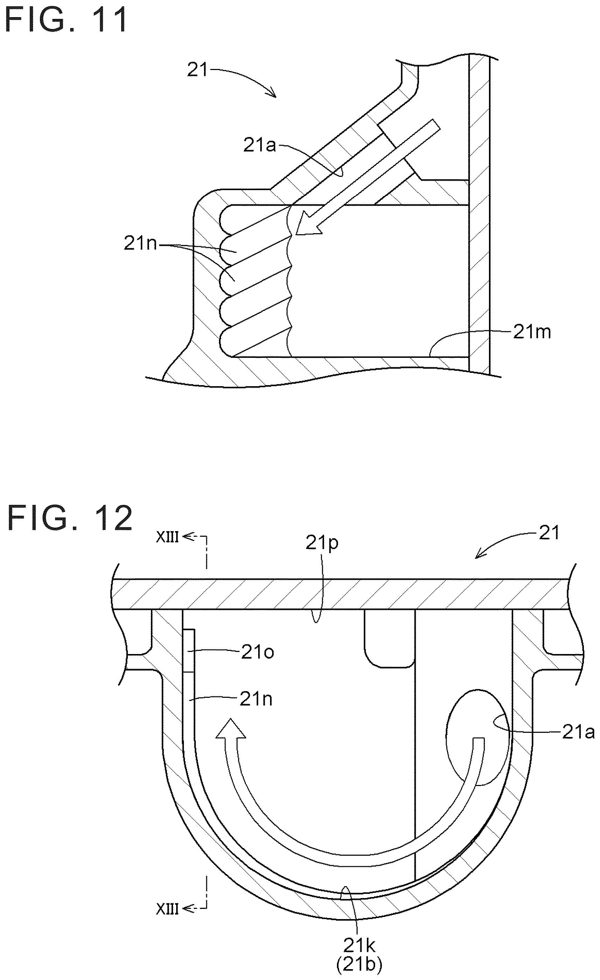

A cross section perpendicular to the extending direction of the plurality of grooves 21n has an arc shape. Groove ends 21o that are downstream ends of the plurality of grooves 21n are not in contact with a flat surface 21p (see FIG. 12) constituting the gas-liquid separation portion 21b. Therefore, the liquid refrigerant 27 etc. guided to the groove ends 21o of the grooves 21n and discharged from the tips fall in the air to the first accumulation portion 21c without running along the flat surface 21p. As shown in FIG. 13, the groove end 21o has a second angle θ2 at which the groove end 21o is closer to the vertical direction than at the first angle θ1 of the groove 21n located upstream. Therefore, the liquid refrigerant 27 etc. flowing obliquely downward along the grooves 21n flow obliquely downward along the groove ends 21o at the angle that is more acute than the first angle θ1, and are accumulated in the first accumulation portion 21c.

The gas refrigerant flowing obliquely into the gas-liquid separation portion 21b through the inlet portion 21a has its flow direction changed to the direction having the first angle θ1 by the guide 21m, and turns into a swirling flow in the direction having the first angle θ1 inside the gas-liquid separation portion 21b by the arc-shaped inner circumferential surface 21k. The liquid refrigerant 27 etc. contained in the gas refrigerant are separated from the gas refrigerant by a centrifugal force generated by the swirling flow and adhere to the inner circumferential surface 21k and the guide 21m. Since the plurality of grooves 21n is formed on the inner circumferential surface 21k, the liquid refrigerant 27 etc. adhering to the inner circumferential surface 21k flow along the plurality of grooves 21n. After the change to the second angle θ2 at the groove ends 21o, the liquid refrigerant 27 etc. are discharged from the tips of the groove ends 21o, fall downward due to gravity, and are accumulated in the first accumulation portion 21c. The gas refrigerant from which the liquid refrigerant 27 etc. have been separated flows upward through the gas-liquid separation portion 21b, turns by 180°, and flows into the extension portion 21d.

In the present embodiment, the plurality of grooves 21n inclined at the first angle θ1 is formed on the inner circumferential surface 21k of the gas-liquid separation portion 21b. Therefore, the liquid refrigerant 27 etc. separated from the gas refrigerant by the centrifugal force can flow along the grooves 21n. In this case, the flow of the liquid refrigerant 27 etc. is limited to the inside of the grooves 21n, and the cross section perpendicular to the extending direction of the grooves 21n has the arc shape. Therefore, small droplets of the liquid refrigerant 27 etc. separated from the gas refrigerant and adhering to the inner circumferential surface 21k are easily gathered in the grooves 21n to form larger droplets. When the liquid refrigerant 27 etc. turn into large droplets, the liquid refrigerant 27 etc. easily flow along the grooves 21n toward the groove ends 21o due to their weights. Since the groove end 21o of the groove 21n is inclined at the second angle θ2 at which the groove end 21o is closer to the vertical direction than at the first angle θ1, the liquid refrigerant 27 etc. are easily discharged from the groove end 21o. Therefore, the liquid refrigerant 27 etc. separated from the gas refrigerant can be accumulated efficiently in the first accumulation portion 21c. Thus, the separated liquid refrigerant 27 etc. can be collected efficiently.

### [Fifth Embodiment]

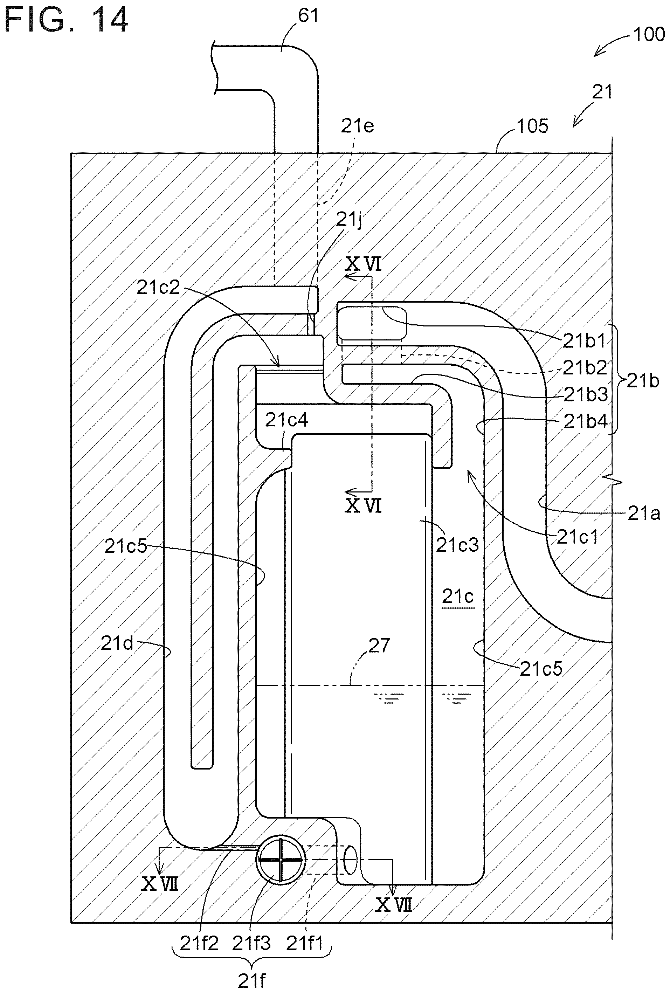

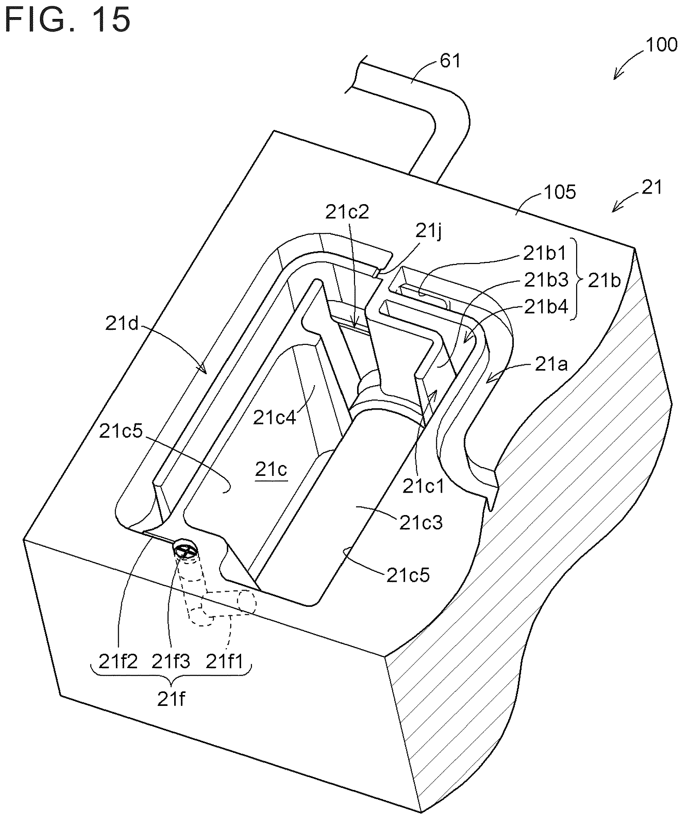

Next, an accumulator 21 disposed inside a manifold 100 according to a fifth embodiment will be described with reference to FIGS. 14 to 17. The present embodiment differs from the above embodiments in that the gas-liquid separation portion 21b of the accumulator 21 includes a separation wall 21b3 having a wall shape and the disposition of the outlet portion 21e connected to the first external refrigerant channel 61 is different. The configuration of the present embodiment is otherwise the same as those of the above embodiments. Therefore, in the description of the present embodiment, the portions with the same configurations as those of the above embodiments are denoted with the same signs, and detailed description of the same configurations will be omitted.

The accumulator 21 is formed inside the channel housing 105 of the manifold 100 according to the present embodiment. Specifically, as shown in FIG. 14, a channel having a gas-liquid separation function is formed in the channel housing 105. The accumulator 21 includes the inlet portion 21a, the gas-liquid separation portion 21b, the first accumulation portion 21c, the extension portion 21d, and the outlet portion 21e. In the accumulator 21 shown in FIG. 14, an upward direction along the drawing sheet will be hereinafter referred to as an upward direction of the accumulator 21, and a downward direction along the drawing sheet will be hereinafter referred to as a downward direction of the accumulator 21. A direction from the top to the bottom of the accumulator 21 will be referred to as a vertical direction.

As described above, the gas refrigerant flows through the first internal refrigerant channel 71 (see FIG. 2) formed inside the channel housing 105. The gas refrigerant flows from the first internal refrigerant channel 71 into the inlet portion 21a of the accumulator 21. The downstream end of the first internal refrigerant channel 71 (the upstream end of the inlet portion 21a) is disposed near the center of the channel housing 105 in the up-down direction. The inlet portion 21a is a channel through which the gas refrigerant flows and that is disposed between the first internal refrigerant channel 71 and the gas-liquid separation portion 21b of the accumulator 21 described later.

The inlet portion 21a of the accumulator 21 extends along an upward curve from the portion connected to the first internal refrigerant channel 71, and further curves at the top to extend in the horizontal direction. The horizontally extending end (downstream end) of the inlet portion 21a is connected to the gas-liquid separation portion 21b. The gas-liquid separation portion 21b has a function of separating, from the gas refrigerant, the liquid refrigerant 27 etc. contained in the gas refrigerant.

The gas-liquid separation portion 21b has a guide space 21b1, a through hole 21b2, the separation wall 21b3, and a guide refrigerant channel 21b4. The guide space 21b1 is a space for guiding the gas refrigerant flowing through the inlet portion 21a to the through hole 21b2. As shown in FIGS. 14 to 16, the guide space 21b1 is a rectangular parallelepiped space connected to the downstream end of the inlet portion 21a and extending from the downstream end of the inlet portion 21a toward the back of the drawing sheet. Hereinafter, the direction toward the back of the drawing sheet will be referred to as a depth direction. The guide space 21b1 communicates with the guide refrigerant channel 21b4 via the through hole 21b2. The guide refrigerant channel 21b4 is formed inward of the inlet portion 21a.

The through hole 21b2 is a hole formed downward from the lower surface in the vertical direction among the six surfaces that define the guide space 21b1. The bore diameter (channel sectional area) of the through hole 21b2 is smaller than the area of the lower surface in the vertical direction among the surfaces that define the guide space 21b1. Therefore, the flow rate of the gas refrigerant flowing through the through hole 21b2 is higher than the flow rate of the gas refrigerant flowing through the inlet portion 21a. Thus, the gas refrigerant impinges at high speed on the separation wall 21b3 described later, thereby separating the liquid refrigerant 27 etc. from the gas refrigerant.

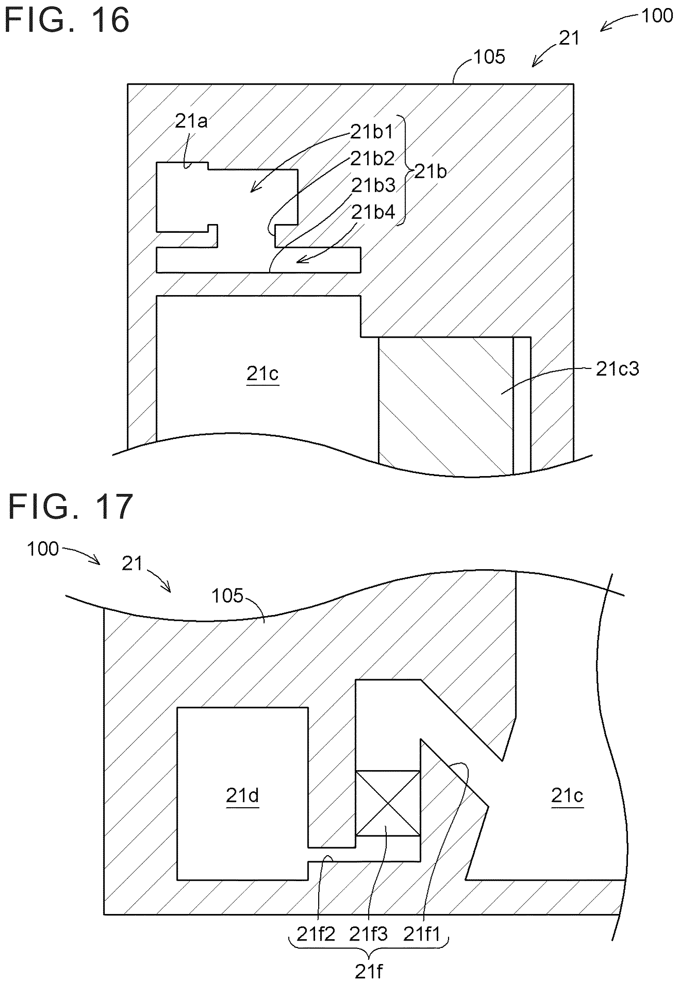

The through hole 21b2 is connected to the guide refrigerant channel 21b4 formed parallel to the inlet portion 21a. That is, the guide refrigerant channel 21b4 extends in the horizontal direction from the upstream end, and curves to extend downward in the vertical direction. The downstream end of the guide refrigerant channel 21b4 is connected to the first accumulation portion 21c. That is, the downstream end of the guide refrigerant channel 21b4 is the downstream end of the gas-liquid separation portion 21b. The length of the guide refrigerant channel 21b4 in the depth direction is larger than the length of the inlet portion 21a in the depth direction (see FIG. 16). Among the walls that define the guide refrigerant channel 21b4, the wall located on the lower side is the separation wall 21b3. The separation wall 21b3 is formed, similarly to the guide refrigerant channel 21b4, so as to extend in the horizontal direction and then curve to extend downward in the vertical direction.

The downstream end of the gas-liquid separation portion 21b is located on the upper side of the channel housing 105, and is connected to the first accumulation portion 21c through an inlet 21c1. The inlet 21c1 is the boundary between the gas-liquid separation portion 21b and the first accumulation portion 21c. The first accumulation portion 21c is a space in which the liquid refrigerant 27 etc. separated from the gas refrigerant in the gas-liquid separation portion 21b are accumulated. A desiccant 21c3 made of zeolite etc. that absorbs excess moisture mixed in the refrigerant circuit C is disposed in the first accumulation portion 21c.

An outlet 21c2 connected to the extension portion 21d described later is disposed at the downstream end of the first accumulation portion 21c. That is, the outlet 21c2 is the boundary between the first accumulation portion 21c and the extension portion 21d. When viewed in the vertical direction, the inlet 21c1 and the outlet 21c2 are disposed away from each other in both side regions facing each other on inner side surfaces 21c5 that form the first accumulation portion 21c. A protruding wall 21c4 (an example of an outflow suppression portion) that suppresses inflow of the liquid refrigerant 27 etc. into the extension portion 21d through the outlet 21c2 is disposed near the outlet 21c2. The protruding wall 21c4 is a wall formed to protrude as a projection inward in the horizontal direction from the inner side surface 21c5 of the first accumulation portion 21c.

The communication portion 21f that establishes communication between the first accumulation portion 21c and the lower end of the extension portion 21d is formed near the bottom of the first accumulation portion 21c. As shown in FIGS. 14, 15, and 17, the communication portion 21f is formed along the horizontal direction. The communication portion 21f includes a large diameter portion 21f1 connected to the first accumulation portion 21c, and a small diameter portion 21f2 that connects the large diameter portion 21f1 and the extension portion 21d and has a bore diameter smaller than that of the large diameter portion 21f1. The large diameter portion 21f1 is formed in a V-shape when viewed in the vertical direction. The small diameter portion 21f2 is an orifice, and is formed to bend at 90° with respect to the large diameter portion 21f1. A strainer 21f3 that removes foreign matter contained in the liquid refrigerant 27 etc. is disposed at the downstream end of the large diameter portion 21f1 (at the boundary with the small diameter portion 21f2).

The extension portion 21d connected to the outlet 21c2 that is the downstream end of the first accumulation portion 21c is a channel through which the gas refrigerant flows after the liquid refrigerant 27 etc. have been separated in the gas-liquid separation portion 21b. The extension portion 21d extends in the horizontal direction on the upper side of the channel housing 105, then curves to extend downward, is folded by 180° at the lower end to extend upward, and further curves to extend in the horizontal direction.

As described above, the lower end of the extension portion 21d (the portion folded by 180°) is connected to the small diameter portion 21f2 of the communication portion 21f. The upstream end and the downstream end of the extension portion 21d overlap each other when viewed in the vertical direction, and communicate with each other by the through passage 21j that is a through hole. The upstream end and the downstream end of the extension portion 21d and the through passage 21j are provided in a central region between the inner side surfaces 21c5, and are provided above the outlet 21c2 of the first accumulation portion 21c.

The outlet portion 21e is disposed upward from the downstream end of the extension portion 21d. The outlet portion 21e is connected to the extension portion 21d, and the gas refrigerant flowing through the extension portion 21d flows through the outlet portion 21e. In other words, the extension portion 21d is a channel connecting the first accumulation portion 21c and the outlet portion 21e, and the flow direction of the gas refrigerant is changed by 90° from the extension portion 21d to the outlet portion 21e. The outlet portion 21e is located at the upper end of the channel housing 105 and is connected to the first external refrigerant channel 61. The gas refrigerant flowing through the outlet portion 21e flows into the first external refrigerant channel 61. That is, the outlet portion 21e is a channel through which the gas refrigerant after the liquid refrigerant 27 etc. have been separated flows out of the accumulator 21.

Next, the operation of the accumulator 21 of the present embodiment will be described. The gas refrigerant flowing from the first internal refrigerant channel 71 into the inlet portion 21a reaches the guide space 21b1 of the gas-liquid separation portion 21b through the inlet portion 21a. The guide space 21b1 is connected to the through hole 21b2, and the flow direction of the gas refrigerant flowing in the horizontal direction is changed to the vertical direction. Since the channel sectional area of the through hole 21b2 is smaller than the area of the lower surface in the vertical direction among the surfaces that define the guide space 21b1, the flow rate of the gas refrigerant flowing through the through hole 21b2 is higher than the flow rate of the gas refrigerant flowing through the inlet portion 21a. The gas refrigerant passing through the through hole 21b2 impinges on the separation wall 21b3 at high speed. The liquid refrigerant 27 etc. are separated from the gas refrigerant by the impingement.

The gas refrigerant from which the liquid refrigerant 27 etc. have been separated flows through the guide refrigerant channel 21b4 with its direction changed to the horizontal direction, and flows into the first accumulation portion 21c through the inlet 21c1. The gas refrigerant flowing into the first accumulation portion 21c flows upward into the extension portion 21d through the outlet 21c2. As described above, the upstream end and the downstream end of the extension portion 21d communicate with each other by the through passage 21j. Therefore, part of the gas refrigerant flowing into the extension portion 21d from the first accumulation portion 21c flows through the through passage 21j and merges with the gas refrigerant flowing through the extension portion 21d at the downstream end of the extension portion 21d.

Since the upstream end and the downstream end of the extension portion 21d communicate with each other by the through passage 21j, the pressure of the gas refrigerant flowing through the extension portion 21d can be kept constant. The merged streams of the gas refrigerant flow into the outlet portion 21e and flow out of the outlet portion 21e to the first external refrigerant channel 61 connected to the outside of the accumulator 21.

The liquid refrigerant 27 etc. separated from the gas refrigerant when the gas refrigerant impinges on the separation wall 21b3 flow along the separation wall 21b3 in the horizontal direction and then in the vertical direction, fall due to gravity, and are accumulated in the first accumulation portion 21c. As described above, the desiccant 21c3 is disposed in the first accumulation portion 21c. The desiccant 21c3 absorbs excess moisture mixed in the refrigerant circuit C, thereby preventing freezing in the first expansion valve 23, the second expansion valve 26, etc.

When viewed in the vertical direction, the inlet 21c1 and the outlet 21c2 are disposed away from each other in both the side regions facing each other on the inner side surfaces 21c5 that form the first accumulation portion 21c. When the inlet 21c1 and the outlet 21c2 are disposed away from each other in this way, it is possible to suppress such a trouble that the liquid refrigerant 27 etc. flowing into the first accumulation portion 21c through the inlet 21c1 flow out through the outlet 21c2 and flow through the extension portion 21d without being accumulated in the first accumulation portion 21c.

The protruding wall 21c4 formed to protrude as a projection inward in the horizontal direction from the inner side surface 21c5 of the first accumulation portion 21c is disposed near the outlet 21c2 disposed at the boundary with the extension portion 21d. By providing the protruding wall 21c4 near the outlet 21c2, it is possible to prevent the liquid surface of the liquid refrigerant 27 etc. from approaching the outlet 21c2, for example, when the manifold 100 tilts on a slope or vibrates while the vehicle is traveling. In addition, it is possible to reduce the occurrence of a case where the gas refrigerant flowing into the first accumulation portion 21c from the gas-liquid separation portion 21b impinges on the liquid surface of the liquid refrigerant 27 etc. accumulated in the first accumulation portion 21c to blow the liquid refrigerant 27 etc. and cause the liquid refrigerant 27 etc. to flow into the outlet 21c2.

Since the first accumulation portion 21c communicates with the extension portion 21d via the communication portion 21f, a negative pressure is generated between the first accumulation portion 21c and the communication portion 21f by the gas refrigerant flowing through the extension portion 21d. Therefore, when the gas refrigerant passes through the lower end of the extension portion 21d, part of the liquid refrigerant 27 etc. accumulated in the first accumulation portion 21c flow through the communication portion 21f by being sucked by the gas refrigerant due to the negative pressure, and are contained again in the gas refrigerant flowing through the extension portion 21d. At this time, foreign matter contained in the liquid refrigerant 27 etc. is captured by the strainer 21f3 and does not flow into the extension portion 21d. As shown in FIGS. 14, 15, and 17, the bore diameter of the small diameter portion 21f2 is much smaller than that of the large diameter portion 21f1. Therefore, only a small amount of the liquid refrigerant 27 etc. is contained again in the gas refrigerant flowing through the extension portion 21d.

The gas refrigerant containing the liquid refrigerant 27 etc. at the lower end of the extension portion 21d flows upward through the extension portion 21d. As described above, the flow direction of the gas refrigerant changes by 90° at the downstream end of the extension portion 21d, and the gas refrigerant flows through the outlet portion 21e. At this time, part of the liquid refrigerant 27 etc. contained in the gas refrigerant adhere to the wall at the downstream end of the extension portion 21d without following the gas refrigerant. As described above, the through passage 21j is provided above the outlet 21c2 of the first accumulation portion 21c. Therefore, the liquid refrigerant 27 etc. adhering to the wall return to the first accumulation portion 21c through the through passage 21j. This suppresses excess outflow of the liquid refrigerant 27 etc. to the outside of the accumulator 21.

In the present embodiment, the channel housing 105 includes the gas-liquid separator that is one of the auxiliary devices. Thus, the size and cost of the manifold 100 can be reduced compared with the case where the accumulator 21 is provided externally.

### [Other Embodiments]

(1) In the first embodiment, the gas-liquid separation portion 21b of the accumulator 21 has the U-shape. However, the present disclosure is not limited to this. Any shape may be adopted as long as the liquid refrigerant 27 etc. can be separated from the gas refrigerant. A plate-shaped portion for separating the liquid refrigerant 27 etc. by causing the liquid refrigerant 27 etc. to impinge thereon may be provided in the gas-liquid separation portion 21b.
(2) In the fourth embodiment, the plurality of grooves 21n is formed on the inner circumferential surface 21k in the configuration of the third embodiment. However, the present disclosure is not limited to this. The plurality of grooves 21n may be formed on the inner circumferential surface 21k in the configuration of the second embodiment.
(3) In the configuration of the third embodiment, the cross section of the groove 21n has the arc shape. However, the present disclosure is not limited to this. For example, the groove may have a triangular cross section, and any shape can be applied as long as the separated liquid refrigerant 27 etc. can be guided effectively to the first accumulation portion 21c.
(4) In the fifth embodiment, in the gas-liquid separation portion 21b of the accumulator 21, the gas refrigerant impinges vertically on the separation wall 21b3 extending in the horizontal direction. However, the present disclosure is not limited to this. The separation wall 21b3 may be inclined toward the first accumulation portion 21c. When the separation wall 21b3 is inclined, the separated liquid refrigerant 27 etc. are easily guided to the first accumulation portion 21c. The separation wall 21b3 may extend in the vertical direction, and the gas refrigerant may impinge horizontally on the separation wall 21b3. When the separation wall 21b3 extends in the vertical direction, the liquid refrigerant 27 etc. separated by impingement of the gas refrigerant fall along the separation wall 21b3. Therefore, the liquid refrigerant 27 etc. are easily accumulated in the first accumulation portion 21c.
(5) In the fifth embodiment, the large diameter portion 21f1 of the communication portion 21f is formed in the V-shape when viewed in the vertical direction. However, the large diameter portion 21f1 may have a linear shape. The small diameter portion 21f2 is disposed to bend at 90° with respect to the large diameter portion 21f1. However, the large diameter portion 21f1 and the small diameter portion 21f2 may be disposed linearly.
(6) In the fifth embodiment, the strainer 21f3 is disposed in the communication portion 21f to remove foreign matter contained in the liquid refrigerant 27 etc. However, the strainer 21f3 may be omitted if the foreign matter contained in the liquid refrigerant 27 etc. does not adversely affect the operation of the refrigerant circuit C.

The following configurations are possible for the above embodiments of the manifold 100.

<1> In one embodiment of the manifold (100), the manifold (100) includes a channel housing (105) having a refrigerant channel (71) through which a refrigerant flows. The channel housing (105) internally includes a gas-liquid separator (21) configured to separate, from a gas refrigerant that is the refrigerant in gas form flowing through the refrigerant channel (71), a liquid refrigerant (27) that is the refrigerant in liquid form contained in the gas refrigerant.

In the manifold (100) of the present embodiment, the channel housing (105) internally includes the gas-liquid separator (21) that is one of the auxiliary devices. Thus, the size and cost of the manifold (100) can be reduced compared with the case where the gas-liquid separator (21) is provided externally.

<2> In the manifold (100) according to <1>, it is preferable that the gas-liquid separator (21) include an inlet portion (21a) into which the gas refrigerant flows, a gas-liquid separation portion (21b) configured to separate the liquid refrigerant (27) from the gas refrigerant flowing into the inlet portion (21a), an accumulation portion (21c) in which the liquid refrigerant (27) separated in the gas-liquid separation portion (21b) is accumulated, an outlet portion (21e) from which the gas refrigerant flows out after the liquid refrigerant (27) has been separated, and an extension portion (21d) that establishes communication between the gas-liquid separation portion (21b) and the outlet portion (21e).

In this configuration, the gas-liquid separator (21) includes the inlet portion (21a) into which the gas refrigerant flows, the gas-liquid separation portion (21b) configured to separate the liquid refrigerant (27) from the gas refrigerant flowing into the inlet portion (21a), the accumulation portion (21c) in which the liquid refrigerant (27) separated in the gas-liquid separation portion (21b) is accumulated, the outlet portion (21e) from which the gas refrigerant flows out after the liquid refrigerant (27) has been separated, and the extension portion (21d) that establishes communication between the gas-liquid separation portion (21b) and the outlet portion (21e). Therefore, the gas refrigerant flowing into the inlet portion (21a) of the gas-liquid separator (21) flows through the extension portion (21d) and flows out from the outlet portion (21e) after the liquid refrigerant (27) has been separated efficiently in the gas-liquid separation portion (21b). The liquid refrigerant (27) separated in the gas-liquid separation portion (21b) can be accumulated in the accumulation portion (21c).

<3> In the manifold (100) according to <2>, it is preferable that the gas-liquid separator (21) further include a through passage (21j) that establishes communication between an upstream end and a downstream end of the extension portion (21d).

In this configuration, the pressure of the gas refrigerant flowing through the extension portion (21d) can be kept constant.

<4> In the manifold (100) according to <2> or <3>, it is preferable that a channel sectional area of the gas-liquid separation portion (21b) be larger than channel sectional areas of the inlet portion (21a) and the outlet portion (21e), a downstream end of the inlet portion (21a) be disposed above an upstream end of the gas-liquid separation portion (21b) and communicate with the gas-liquid separation portion (21b), the extension portion (21d) be folded from a downstream end of the gas-liquid separation portion (21b) and extend downward, the outlet portion (21e) be disposed on a side of a downstream end of the extension portion (21d), and the gas refrigerant flow downward from the inlet portion (21a) into the gas-liquid separation portion (21b) and flow out laterally from the outlet portion (21e).

In this configuration, the channel sectional area of the gas-liquid separation portion (21b) of the gas-liquid separator (21) is larger than the channel sectional areas of the inlet portion (21a) and the outlet portion (21e). The downstream end of the inlet portion (21a) is disposed above the upstream end of the gas-liquid separation portion (21b) and communicates with the gas-liquid separation portion (21b). The extension portion (21d) is folded from the downstream end of the gas-liquid separation portion (21b) and extends downward. The outlet portion (21e) is disposed on the side of the downstream end of the extension portion (21d). The gas refrigerant flows downward from the inlet portion (21a) into the gas-liquid separation portion (21b) and flows out laterally from the outlet portion (21e). With this configuration, the volume occupied by the gas-liquid separator (21) can be minimized while ensuring the necessary function. Thus, the size and cost of the manifold (100) can be reduced.

<5> In the manifold (100) according to <2> or <3>, it is preferable that the gas-liquid separation portion (21b) have an inner circumferential surface (21k) having an arc shape when viewed in a vertical direction, a downstream end of the inlet portion (21a) be disposed on a side of an upstream end of the gas-liquid separation portion (21b) and communicate with the gas-liquid separation portion (21b), the extension portion (21d) be folded from a downstream end of the gas-liquid separation portion (21b) and extend downward, the outlet portion (21e) be disposed on a side of a downstream end of the extension portion (21d), and the gas refrigerant flow in from the inlet portion (21a) along a direction perpendicular to the vertical direction and along a tangential direction of the inner circumferential surface (21k) of the gas-liquid separation portion (21b), swirl along the inner circumferential surface (21k), and flow out laterally from the outlet portion (21e).

In this configuration, the gas-liquid separation portion (21b) has the inner circumferential surface (21k) having the arc shape when viewed in the vertical direction. The downstream end of the inlet portion (21a) is disposed on the side of the upstream end of the gas-liquid separation portion (21b) and communicates with the gas-liquid separation portion (21b). The extension portion (21d) is folded from the downstream end of the gas-liquid separation portion (21b) and extends downward. The outlet portion (21e) is disposed on the side of the downstream end of the extension portion (21d). The gas refrigerant flows in from the inlet portion (21a) along the direction perpendicular to the vertical direction and along the tangential direction of the inner circumferential surface (21k) of the gas-liquid separation portion (21b), swirls along the inner circumferential surface (21k), and flows out laterally from the outlet portion (21e). Therefore, the gas refrigerant flowing into the inlet portion (21a) of the gas-liquid separator (21) flows out from the outlet portion (21e) after the liquid refrigerant (27) has been separated efficiently by a centrifugal force in the gas-liquid separation portion (21b). The volume occupied by the gas-liquid separator (21) can be minimized while ensuring the necessary function. Thus, the size and cost of the manifold (100) can be reduced.

<6> In the manifold (100) according to <2> or <3>, it is preferable that the gas-liquid separation portion (21b) have an inner circumferential surface (21k) having an arc shape when viewed in a vertical direction, and a guide (21m) having a curved surface below the inner circumferential surface (21k), a downstream end of the inlet portion (21a) be disposed on a side of an upstream end of the gas-liquid separation portion (21b) so as to overlap the guide (21m) at least in part when viewed in the vertical direction, and communicate with the gas-liquid separation portion (21b), the extension portion (21d) be folded from a downstream end of the gas-liquid separation portion (21b) and extend downward, the outlet portion (21e) be disposed on a side of a downstream end of the extension portion (21d), and the gas refrigerant flow in from the inlet portion (21a) along a tangential direction of the inner circumferential surface (21k) of the gas-liquid separation portion (21b) so as to flow obliquely downward with respect to the vertical direction, swirl along the inner circumferential surface (21k), and flow out laterally from the outlet portion (21e).

In this configuration, the gas-liquid separation portion (21b) has the inner circumferential surface (21k) having the arc shape when viewed in the vertical direction, and the guide (21m) having the curved surface below the inner circumferential surface (21k). The downstream end of the inlet portion (21a) is disposed on the side of the upstream end of the gas-liquid separation portion (21b) so as to overlap the guide (21m) at least in part when viewed in the vertical direction, and communicates with the gas-liquid separation portion (21b). The extension portion (21d) is folded from the downstream end of the gas-liquid separation portion (21b) and extends downward. The outlet portion (21e) is disposed on the side of the downstream end of the extension portion (21d). The gas refrigerant flows in from the inlet portion (21a) along the tangential direction of the inner circumferential surface (21k) of the gas-liquid separation portion (21b) so as to flow from the inlet portion (21a) obliquely downward with respect to the vertical direction, swirls along the inner circumferential surface (21k), and flows out laterally from the outlet portion (21e). Therefore, the gas refrigerant flowing into the inlet portion (21a) of the gas-liquid separator (21) flows out from the outlet portion (21e) after the liquid refrigerant (27) has been separated efficiently by a centrifugal force in the gas-liquid separation portion (21b). The volume occupied by the gas-liquid separator (21) can be minimized while ensuring the necessary function. Thus, the size and cost of the manifold (100) can be reduced.

<7> In the manifold (100) according to <2> or <3>, it is preferable that the gas-liquid separation portion (21b) have an inner circumferential surface (21k) having an arc shape when viewed in a vertical direction, and the gas-liquid separation portion (21b) have a plurality of grooves (21n) extending along the inner circumferential surface (21k).

In this configuration, the gas-liquid separation portion (21b) has the plurality of grooves (21n) extending along the inner circumferential surface (21k) having the arc shape. Therefore, the liquid refrigerant (27) separated from the gas refrigerant by a centrifugal force in the gas-liquid separation portion (21b) can flow along the grooves (21n). In this case, the flow of the liquid refrigerant (27) is limited to the inside of the grooves (21n). Therefore, the separated liquid refrigerant (27) is easily gathered to form large droplets. Thus, the separated liquid refrigerant (27) can be collected efficiently.

<8> In the manifold (100) according to <7>, it is preferable that the gas-liquid separation portion (21b) have a guide (21m) having a curved surface below the inner circumferential surface (21k), and each of the plurality of grooves (21n) include a portion inclined with respect to the vertical direction at a first angle (θ1) at which the groove (21n) is parallel to a tangential direction of a tip of the guide (21m) such that the liquid refrigerant (27) flows obliquely downward.

In this configuration, the plurality of grooves (21n) is inclined at the first angle (θ1) with respect to the vertical direction. Therefore, the separated liquid refrigerant (27) easily flows obliquely downward along the grooves (21n). Thus, the separated liquid refrigerant (27) can be collected efficiently.

<9> In the manifold (100) according to <8>, it is preferable that a downstream groove end (21o) of each of the plurality of grooves (21n) in a swirling direction of the gas refrigerant be inclined at a second angle (θ2) at which the groove end (21o) is closer to the vertical direction than at the first angle (θ1) such that the liquid refrigerant (27) flows obliquely downward.

In this configuration, the groove end (21o) of the groove (21n) is inclined at the second angle (θ2) at which the groove end (21o) is closer to the vertical direction than at the first angle (θ1). Therefore, the liquid refrigerant (27) is easily discharged from the groove end (21o) to the accumulation portion (21c).

<10> In the manifold (100) according to any one of <7> to <9>, it is preferable that a cross section perpendicular to an extending direction of the groove (21n) have an arc shape.

In this configuration, the cross section perpendicular to the extending direction of the groove (21n) has the arc shape. Therefore, the separated liquid refrigerant (27) can be easily gathered and efficiently collected in the form of large droplets.

<11> In the manifold (100) according to any one of <1> to <3>, it is preferable that the gas-liquid separator (21) include a gas-liquid separation portion (21b) configured to separate the liquid refrigerant (27) from the gas refrigerant by impingement of the refrigerant.

In this configuration, the gas-liquid separator (21) includes the gas-liquid separation portion (21b) configured to separate the liquid refrigerant (27) from the gas refrigerant by impingement of the refrigerant. Therefore, the liquid refrigerant (27) can be separated efficiently from the gas refrigerant by causing the refrigerant to impinge on the gas-liquid separation portion (21b).

<12> In the manifold (100) according to <11>, it is preferable that the gas-liquid separator (21) further include an inlet portion (21a) through which the gas refrigerant flows up to a point short of the gas-liquid separation portion (21b), an accumulation portion (21c) in which the liquid refrigerant (27) separated in the gas-liquid separation portion (21b) is accumulated, an outlet portion (21e) from which the gas refrigerant flows out after the liquid refrigerant (27) has been separated in the gas-liquid separation portion (21b), and an extension portion (21d) that establishes communication between the accumulation portion (21c) and the outlet portion (21e), and an outflow suppression portion (21c4) configured to suppress outflow of the liquid refrigerant (27) accumulated in the accumulation portion (21c) to the extension portion (21d) be formed to protrude as a projection at an outlet (21c2) that is a boundary between the accumulation portion (21c) and the extension portion (21d).

In this configuration, the outflow suppression portion (21c4) can prevent the liquid surface of the liquid refrigerant (27) etc. from approaching the outlet (21c2), for example, when the manifold (100) tilts on a slope or vibrates while the vehicle is traveling. In addition, the outflow suppression portion (21c4) can reduce the occurrence of a case where the gas refrigerant flowing into the accumulation portion (21c) from the gas-liquid separation portion (21b) impinges on the liquid surface of the liquid refrigerant (27) etc. accumulated in the accumulation portion (21c) to blow the liquid refrigerant (27) etc. and cause the liquid refrigerant (27) etc. to flow into the outlet (21c2).

<13> In the manifold (100) according to <12>, it is preferable that an inlet (21c1) that is a boundary between the gas-liquid separator (21) and the accumulation portion (21c) and the outlet (21c2) be disposed away from each other in both side regions facing each other on inner side surfaces (21c5) that form the accumulation portion (21c) when viewed in a vertical direction.

From the inlet (21c1) that is the boundary between the gas-liquid separator (21) and the accumulation portion (21c), not only the gas refrigerant but also the liquid refrigerant (27) etc. flow into the accumulation portion (21c). Therefore, when the inlet (21c1) and the outlet (21c2) are disposed away from each other in both the side regions facing each other on the inner side surfaces (21c5) that form the accumulation portion (21c) when viewed in the vertical direction, it is possible to suppress such a trouble that the liquid refrigerant (27) etc. flowing into the accumulation portion (21c) through the inlet (21c1) flow out through the outlet (21c2) without being accumulated in the accumulation portion (21c).

<14> In the manifold (100) according to <12> or <13>, it is preferable that a downstream end of the extension portion (21d) of the gas-liquid separator (21) be provided in a central region between inner side surfaces (21c5) when viewed in a vertical direction, and the gas-liquid separator (21) further include a through passage (21j) that establishes communication between an upstream end and the downstream end of the extension portion (21d).

In this configuration, the pressure of the gas refrigerant flowing through the extension portion (21d) can be kept constant. When the entire lower end of the extension portion (21d) (the portion folded by 180°) is filled with the liquid refrigerant (27) etc. and the gas refrigerant cannot therefore flow through the extension portion (21d), the gas refrigerant can directly flow to the outlet portion (21e) via the through passage (21j).

### INDUSTRIAL APPLICABILITY

The present disclosure is applicable to manifolds.

### Description of the Reference Numerals

21: accumulator (gas-liquid separator), 21a: inlet portion, 21b: gas-liquid separation portion, 21c: first accumulation portion (accumulation portion), 21c1: inlet, 21c2: outlet, 21c4: protruding wall (outflow suppression portion), 21c5: inner side surface, 21d: extension portion, 21e: outlet portion, 21f: communication portion, 21j: through passage, 21k: inner circumferential surface, 21m: guide, 21n: groove, 21o: groove end, 27: liquid refrigerant, 71: first internal refrigerant channel (refrigerant channel), 100: manifold, 105: channel housing, θ1: first angle, θ2: second angle

## Claims

1. A manifold comprising a channel housing having a refrigerant channel through which a refrigerant flows, wherein the channel housing internally includes a gas-liquid separator configured to separate, from a gas refrigerant that is the refrigerant in gas form flowing through the refrigerant channel, a liquid refrigerant that is the refrigerant in liquid form contained in the gas refrigerant.

2. The manifold according to claim 1, wherein the gas-liquid separator includes
an inlet portion into which the gas refrigerant flows,
a gas-liquid separation portion configured to separate the liquid refrigerant from the gas refrigerant flowing into the inlet portion,
an accumulation portion in which the liquid refrigerant separated in the gas-liquid separation portion is accumulated,
an outlet portion from which the gas refrigerant flows out after the liquid refrigerant has been separated, and
an extension portion that establishes communication between the gas-liquid separation portion and the outlet portion.

3. The manifold according to claim 2, wherein the gas-liquid separator further includes a through passage that establishes communication between an upstream end and a downstream end of the extension portion.

4. The manifold according to claim 2 or 3, wherein:
a channel sectional area of the gas-liquid separation portion is larger than channel sectional areas of the inlet portion and the outlet portion;
a downstream end of the inlet portion is disposed above an upstream end of the gas-liquid separation portion and communicates with the gas-liquid separation portion;
the extension portion is folded from a downstream end of the gas-liquid separation portion and extends downward;
the outlet portion is disposed on a side of a downstream end of the extension portion; and
the gas refrigerant flows downward from the inlet portion into the gas-liquid separation portion and flows out laterally from the outlet portion.

5. The manifold according to claim 2 or 3, wherein:
the gas-liquid separation portion has an inner circumferential surface having an arc shape when viewed in a vertical direction;
a downstream end of the inlet portion is disposed on a side of an upstream end of the gas-liquid separation portion and communicates with the gas-liquid separation portion;
the extension portion is folded from a downstream end of the gas-liquid separation portion and extends downward;
the outlet portion is disposed on a side of a downstream end of the extension portion; and
the gas refrigerant flows in from the inlet portion along a direction perpendicular to the vertical direction and along a tangential direction of the inner circumferential surface of the gas-liquid separation portion, swirls along the inner circumferential surface, and flows out laterally from the outlet portion.

6. The manifold according to claim 2 or 3, wherein:
the gas-liquid separation portion has an inner circumferential surface having an arc shape when viewed in a vertical direction, and a guide having a curved surface below the inner circumferential surface;
a downstream end of the inlet portion is disposed on a side of an upstream end of the gas-liquid separation portion so as to overlap the guide at least in part when viewed in the vertical direction, and communicates with the gas-liquid separation portion;
the extension portion is folded from a downstream end of the gas-liquid separation portion and extends downward;
the outlet portion is disposed on a side of a downstream end of the extension portion; and
the gas refrigerant flows in from the inlet portion along a tangential direction of the inner circumferential surface of the gas-liquid separation portion so as to flow obliquely downward with respect to the vertical direction, swirls along the inner circumferential surface, and flows out laterally from the outlet portion.

7. The manifold according to claim 2 or 3, wherein:
the gas-liquid separation portion has an inner circumferential surface having an arc shape when viewed in a vertical direction; and
the gas-liquid separation portion has a plurality of grooves extending along the inner circumferential surface.

8. The manifold according to claim 7, wherein:
the gas-liquid separation portion has a guide having a curved surface below the inner circumferential surface; and
each of the plurality of grooves includes a portion inclined with respect to the vertical direction at a first angle at which the groove is parallel to a tangential direction of a tip of the guide such that the liquid refrigerant flows obliquely downward.

9. The manifold according to claim 8, wherein a downstream groove end of each of the plurality of grooves in a swirling direction of the gas refrigerant is inclined at a second angle at which the groove end is closer to the vertical direction than at the first angle such that the liquid refrigerant flows obliquely downward.

10. The manifold according to claim 7, wherein a cross section perpendicular to an extending direction of the groove has an arc shape.

11. The manifold according to any one of claims 1 to 3, wherein the gas-liquid separator includes a gas-liquid separation portion configured to separate the liquid refrigerant from the gas refrigerant by impingement of the refrigerant.

12. The manifold according to claim 11, wherein:
the gas-liquid separator further includes an inlet portion through which the gas refrigerant flows up to a point short of the gas-liquid separation portion, an accumulation portion in which the liquid refrigerant separated in the gas-liquid separation portion is accumulated, an outlet portion from which the gas refrigerant flows out after the liquid refrigerant has been separated in the gas-liquid separation portion, and an extension portion that establishes communication between the accumulation portion and the outlet portion; and
an outflow suppression portion configured to suppress outflow of the liquid refrigerant accumulated in the accumulation portion to the extension portion is formed to protrude as a projection at an outlet that is a boundary between the accumulation portion and the extension portion.

13. The manifold according to claim 12, wherein an inlet that is a boundary between the gas-liquid separation portion and the accumulation portion and the outlet are disposed away from each other in both side regions facing each other on inner side surfaces that form the accumulation portion when viewed in a vertical direction.

14. The manifold according to claim 12, wherein a downstream end of the extension portion of the gas-liquid separator is provided in a central region between inner side surfaces when viewed in a vertical direction, and the gas-liquid separator further includes a through passage that establishes communication between an upstream end and the downstream end of the extension portion.
